# EUROPEAN PATENT APPLICATION

(11) **EP 4 365 976 A1**
(43) Date of publication of application: **08.05.2024**
(21) Application number: 23170787.8
(22) Date of filing: 28.04.2023
(51) Int. Cl.: H01M 4/131, H01M 4/133, H01M 4/134, H01M 10/0525, H01M 10/0567, H01M 10/42, H01M 10/0569, H01M 10/0568, H01M 4/02, H01M 10/44

(54) **LITHIUM-ION BATTERY**

(30) Priority: 07.11.2022 CN 202211381868
(71) Applicant: CALB Group Co., Ltd., Changzhou City, Jiangsu Province (CN)
(72) Inventor: ZONG, Fengyi, Changzhou City, Jiangsu Province (CN); CAO, Kai, Changzhou City, Jiangsu Province (CN); LIAO, Liuhui, Changzhou City, Jiangsu Province (CN)
(74) Representative: Becker, Eberhard

(57) **Abstract**

A lithium-ion battery includes a positive pole piece and a negative pole piece. The positive pole piece includes a positive electrode active material, and a solid electrolyte interface film CEI film is formed on a surface of the positive electrode active material. The negative pole piece includes a negative electrode active material, and a solid electrolyte interface film SEI film is formed on a surface of the negative electrode active material. A resistance R_{CEI} of the CEI film and a resistance R_{SEI} of the SEI film satisfy R_{CEI}/R_{SEI} =0.5 to 1.8. In the lithium-ion battery provided by the disclosure, lithium ions can be smoothly deintercalated in both positive and negative electrodes, and the internal temperature of the lithium ion battery is increased to a certain extent, so the diffusion rate of lithium ions is increased. The lithium-ion battery thereby exhibits a good low-temperature discharge capability.

## Description

### BACKGROUND

### Technical Field

The disclosure relates to the technical field of batteries, and in particular, relates to a lithium-ion battery.

### Description of Related Art

Lithium-ion batteries are widely applied in 3C digital, electric tools, aerospace, energy storage, power vehicles and other fields due to their advantages such as high specific energy, no memory effect, long cycle life. In order to meet different conditions of use, more users have higher requirements on the performance of lithium-ion batteries at low temperatures, especially the discharge capability of lithium-ion batteries at low temperatures, so as to ensure that lithium-ion batteries will not affect the normal use of users at low temperatures.

However, at low temperatures, in a commonly-used lithium-ion battery currently available on the market, the interface resistance between the positive and negative electrodes and the electrolyte is significantly increased, making it difficult for lithium ions to deintercalate at the positive and negative electrodes. It thus can be seen that since lithium-ion batteries exhibit unfavorable low-temperature discharge capabilities, users' requirements are not satisfied as a result.

### SUMMARY

The disclosure aims to provide a lithium-ion battery to solve the problem of low-temperature discharge capability of the lithium-ion battery.

According to the above, the disclosure provides a lithium-ion battery including a positive pole piece and a negative pole piece. The positive pole piece includes a positive electrode active material, and a solid electrolyte interface film CEI film is formed on a surface of the positive electrode active material. The negative pole piece includes a negative electrode active material, and a solid electrolyte interface film SEI film is formed on a surface of the negative electrode active material. A resistance R_{CEI} of the CEI film and a resistance R_{SEI} of the SEI film satisfy R_{CEI}/R_{SEI}=0.5 to 1.8. In the lithium-ion battery provided by the disclosure, lithium ions can be smoothly deintercalated in both positive and negative electrodes, and the internal temperature of the lithium ion battery is increased to a certain extent, so the diffusion rate of lithium ions is increased. These two effects are complementary to each other, so that the lithium-ion battery exhibits a good low-temperature discharge capability.

### DESCRIPTION OF THE EMBODIMENTS

In order to enable a person having ordinary skill in the art to better understand the solutions of the disclosure, the technical solutions in the embodiments of the disclosure will be clearly and completely described below. Apparently, the described embodiments are only some of the embodiments of the disclosure, not all of the embodiments.

It should be noted that in the following examples and comparative examples, although the positive pole piece, the separator film, and the negative pole piece form the cell by winding, it is not limited that the cell can only be formed by winding, and the stacking method can also be used. In practical applications, one of stacking or winding can be specifically selected according to needs.

Further, the separator film used in the lithium-ion battery provided by the disclosure has no special requirements on material and shape, and the separator film of any material and/or shape in the related can be selected according to actual needs.

Besides, in the embodiments, CNT is carbon nanotube, CMC is carboxymethyl cellulose, NCM is lithium nickel cobalt manganese oxide LiNi_{0.55}Co_{0.15}Mn_{0.3}O₂, PVDF is polyvinylidene fluoride, NMP is N-methylpyrrolidone, EC is vinyl carbonate, EMC is ethyl methyl carbonate, DEC is diethyl carbonate, FEC is fluoroethylene carbonate, D2 is 1,1,2,2-tetrafluoroethyl-2,2,3,3-tetrafluoropropyl ether, DTD is vinyl sulfate, and DMC is dimethyl carbonate.

NCM-A (awt%) means that the surface of NCM is coated with substance A and the mass of substance A is a% of the mass of NCM-A.

### Example 1

1) Preparation of the negative pole piece: the negative electrode active material artificial graphite, the conductive agent CNT, and the binder CMC were mixed at a mass ratio of 92:4:4, and then the solvent deionized water was added to the resulting mixed material. The mixture was stirred under the action of a vacuum mixer until the system was uniform, and the negative electrode slurry was obtained. The negative electrode slurry was uniformly coated on a negative electrode current collector copper foil, dried under vacuum at 100°C for 12 hours, and cold pressed at a compaction density of 1.62 g/cm³ to make the particles tightly packed, and finally a negative pole piece with a pore area of 3.2 m²/g was obtained.
2) Preparation of the positive pole piece: the positive electrode active material NCM, the conductive agent carbon black, and the binder PVDF were mixed in a mass ratio of 94:3:3, and then the dispersant NMP was added to the resulting mixed material. The mixture was stirred under the action of a vacuum mixer until the system was uniform, and the positive electrode slurry was obtained. The positive electrode slurry was uniformly coated on a positive electrode current collector aluminum foil, dried under vacuum at 85°C for 24 hours, and then cold pressed at a compaction density of 3.55 g/cm³ to make the particles tightly packed, and finally a positive pole piece with a pore area of 2.5 m²/g was obtained.
3) Assembly of the cell: the positive pole piece, the separator film, and the negative pole piece were wound to form a cell, and the separator film was placed between the positive pole piece and the negative pole piece for isolation.
4) Electrolyte configuration: by mass ratio, EC:EMC:DEC=1:1:1 was used as the solvent, LiPF₆ was used as the lithium salt, and the concentration of the lithium salt in the electrolyte was 1.2 mol/L. By mass percentage, FEC and D2 accounting for 3% and 2.5% of the total mass of the electrolyte were used as the additives.
5) Battery assembly and formation: the cell was put into the casing, and the electrolyte was injected into the casing, sealed, and left to stand for 12 hours. After the electrolyte completely infiltrated the positive and negative electrodes, at 25°C, it was first charged at 0.02C to a voltage of 3.4V and then charged at 0.05C to a voltage of 3.7V to form an SEI film on the surface of the negative electrode active material. The gas generated in the battery was then pumped out, and the battery was charged at 0.33C to the upper limit voltage and charged at a constant voltage of 0.05C and then cut off form a CEI film on the surface of the positive electrode active material, and the lithium-ion battery of this example was obtained.

### Example 2

1) Preparation of the negative pole piece: the negative electrode active material artificial graphite, the conductive agent CNT, and the binder CMC were mixed at a mass ratio of 92:4:4, and then the solvent deionized water was added to the resulting mixed material. The mixture was stirred under the action of a vacuum mixer until the system was uniform, and the negative electrode slurry was obtained. The negative electrode slurry was uniformly coated on a negative electrode current collector copper foil, dried under vacuum at 100°C for 12 hours, and cold pressed at a compaction density of 1.62 g/cm³ to make the particles tightly packed, and finally a negative pole piece with a pore area of 3.2 m²/g was obtained.
2) Preparation of the positive pole piece: the positive electrode active material NCM, the conductive agent carbon black, and the binder PVDF were mixed in a mass ratio of 94:3:3, and then the dispersant NMP was added to the resulting mixed material. The mixture was stirred under the action of a vacuum mixer until the system was uniform, and the positive electrode slurry was obtained. The positive electrode slurry was uniformly coated on a positive electrode current collector aluminum foil, dried under vacuum at 85°C for 24 hours, and then cold pressed at a compaction density of 3.55 g/cm³ to make the particles tightly packed, and finally a positive pole piece with a pore area of 2.5 m²/g was obtained.
3) Assembly of the cell: the positive pole piece, the separator film, and the negative pole piece were wound to form a cell, and the separator film was placed between the positive pole piece and the negative pole piece for isolation.
4) Electrolyte configuration: by mass ratio, EC:EMC:DEC=1:1:1 was used as the solvent, LiPF₆ was used as the lithium salt, and the concentration of the lithium salt in the electrolyte was 1.2 mol/L. By mass percentage, FEC and D2 accounting for 1% and 1% of the total mass of the electrolyte were used as the additives.
5) Battery assembly and formation: the cell was put into the casing, and the electrolyte was injected into the casing, sealed, and left to stand for 12 hours. After the electrolyte completely infiltrated the positive and negative electrodes, at 45°C, it was first charged at 0.02C to a voltage of 3.4V and then charged at 0.05C to a voltage of 3.7V to form an SEI film on the surface of the negative electrode active material. The gas generated in the battery was then pumped out, and the battery was charged at 0.33C to the upper limit voltage and charged at a constant voltage of 0.05C and then cut off to form a CEI film on the surface of the positive electrode active material, and the lithium-ion battery of this example was obtained.

### Example 3

1) Preparation of the negative pole piece: the negative electrode active material artificial graphite, the conductive agent CNT, and the binder CMC were mixed at a mass ratio of 92:4:4, and then the solvent deionized water was added to the resulting mixed material. The mixture was stirred under the action of a vacuum mixer until the system was uniform, and the negative electrode slurry was obtained. The negative electrode slurry was uniformly coated on a negative electrode current collector copper foil, dried under vacuum at 100°C for 12 hours, and cold pressed at a compaction density of 1.62 g/cm³ to make the particles tightly packed, and finally a negative pole piece with a pore area of 3.2 m²/g was obtained.
2) Preparation of the positive pole piece: the positive electrode active material NCM-H₃BO₃ (0.15wt%), the conductive agent carbon black, and the binder PVDF were mixed in a mass ratio of 94:3:3, and then the dispersant NMP was added to the resulting mixed material. The mixture was stirred under the action of a vacuum mixer until the system was uniform, and the positive electrode slurry was obtained. The positive electrode slurry was uniformly coated on a positive electrode current collector aluminum foil, dried under vacuum at 85°C for 24 hours, and then cold pressed at a compaction density of 3.55 g/cm³ to make the particles tightly packed, and finally a positive pole piece with a pore area of 2.5 m²/g was obtained.
   In this example, the method of coating H₃BO₃ on the surface of NCM was as follows: NCM and H₃BO₃ were mixed according to the mass ratio of 100:0.155, homogenized by a sand mill, then placed in a high-temperature sintering furnace at a rate of 5 °C/min to 350 °C, kept for 7 hours, and naturally cooled to room temperature.
3) Assembly of the cell: the positive pole piece, the separator film, and the negative pole piece were wound to form a cell, and the separator film was placed between the positive pole piece and the negative pole piece for isolation.
4) Electrolyte configuration: by mass ratio, EC:EMC:DEC=1:1:1 was used as the solvent, LiPF₆ was used as the lithium salt, and the concentration of the lithium salt in the electrolyte was 1.2 mol/L. By mass percentage, FEC and D2 accounting for 2% and 3% of the total mass of the electrolyte were used as the additives.
5) Battery assembly and formation: the cell was put into the casing, and the electrolyte was injected into the casing, sealed, and left to stand for 12 hours. After the electrolyte completely infiltrated the positive and negative electrodes, at 25°C, it was first charged at 0.02C to a voltage of 3.4V and then charged at 0.05C to a voltage of 3.7V to form an SEI film on the surface of the negative electrode active material. The gas generated in the battery was then pumped out, and the battery was charged at 0.33C to the upper limit voltage and charged at a constant voltage of 0.05C and then cut off to form a CEI film on the surface of the positive electrode active material, and the lithium-ion battery of this example was obtained.

### Example 4

1) Preparation of the negative pole piece: the negative electrode active material artificial graphite, the conductive agent CNT, and the binder CMC were mixed at a mass ratio of 92:4:4, and then the solvent deionized water was added to the resulting mixed material. The mixture was stirred under the action of a vacuum mixer until the system was uniform, and the negative electrode slurry was obtained. The negative electrode slurry was uniformly coated on a negative electrode current collector copper foil, dried under vacuum at 100°C for 12 hours, and cold pressed at a compaction density of 1.62 g/cm³ to make the particles tightly packed, and finally a negative pole piece with a pore area of 3.2 m²/g was obtained.
2) Preparation of the positive pole piece: the positive electrode active material NCM-Li₂WO₄ (0.5wt%), the conductive agent carbon black, and the binder PVDF were mixed in a mass ratio of 94:3:3, and then the dispersant NMP was added to the resulting mixed material. The mixture was stirred under the action of a vacuum mixer until the system was uniform, and the positive electrode slurry was obtained. The positive electrode slurry was uniformly coated on a positive electrode current collector aluminum foil, dried under vacuum at 85°C for 24 hours, and then cold pressed at a compaction density of 3.55 g/cm³ to make the particles tightly packed, and finally a positive pole piece with a pore area of 2.5 m²/g was obtained.
   In this example, the method of coating Li2WO4 on the surface of NCM was as follows: NCM and Li2WO were mixed according to the mass ratio of 100:0.5, homogenized by a sand mill, then placed in a high-temperature sintering furnace at a rate of 5 °C/min to 450 °C, kept for 7 hours, and naturally cooled to room temperature.
3) Assembly of the cell: the positive pole piece, the separator film, and the negative pole piece were wound to form a cell, and the separator film was placed between the positive pole piece and the negative pole piece for isolation.
4) Electrolyte configuration: by mass ratio, EC:EMC:DEC=1:1:1 was used as the solvent, LiPF₆ was used as the lithium salt, and the concentration of the lithium salt in the electrolyte was 1.2 mol/L. By mass percentage, FEC and D2 accounting for 1% and 1.5% of the total mass of the electrolyte were used as the additives.
5) Battery assembly and formation: the cell was put into the casing, and the electrolyte was injected into the casing, sealed, and left to stand for 12 hours. After the electrolyte completely infiltrated the positive and negative electrodes, at 25°C, it was first charged at 0.02C to a voltage of 3.4V and then charged at 0.05C to a voltage of 3.7V to form an SEI film on the surface of the negative electrode active material. The gas generated in the battery was then pumped out, and the battery was charged at 0.33C to the upper limit voltage and charged at a constant voltage of 0.05C and then cut off to form a CEI film on the surface of the positive electrode active material, and the lithium-ion battery of this example was obtained.

### Example 5

1) Preparation of the negative pole piece: the negative electrode active material artificial graphite, the conductive agent CNT, and the binder CMC were mixed at a mass ratio of 92:4:4, and then the solvent deionized water was added to the resulting mixed material. The mixture was stirred under the action of a vacuum mixer until the system was uniform, and the negative electrode slurry was obtained. The negative electrode slurry was uniformly coated on a negative electrode current collector copper foil, dried under vacuum at 100°C for 12 hours, and cold pressed at a compaction density of 1.5 g/cm³ to make the particles tightly packed, and finally a negative pole piece with a pore area of 3.6 m²/g was obtained.
2) Preparation of the positive pole piece: the positive electrode active material NCM, the conductive agent carbon black, and the binder PVDF were mixed in a mass ratio of 94:3:3, and then the dispersant NMP was added to the resulting mixed material. The mixture was stirred under the action of a vacuum mixer until the system was uniform, and the positive electrode slurry was obtained. The positive electrode slurry was uniformly coated on a positive electrode current collector aluminum foil, dried under vacuum at 85°C for 24 hours, and then cold pressed at a compaction density of 3.55 g/cm³ to make the particles tightly packed, and finally a positive pole piece with a pore area of 2.5 m²/g was obtained.
3) Assembly of the cell: the positive pole piece, the separator film, and the negative pole piece were wound to form a cell, and the separator film was placed between the positive pole piece and the negative pole piece for isolation.
4) Electrolyte configuration: by mass ratio, EC:EMC:DEC=1:1:1 was used as the solvent, LiPF₆ was used as the lithium salt, and the concentration of the lithium salt in the electrolyte was 1.2 mol/L. By mass percentage, FEC accounting for 5% of the total mass of the electrolyte was used as the additive.
5) Battery assembly and formation: the cell was put into the casing, and the electrolyte was injected into the casing, sealed, and left to stand for 12 hours. After the electrolyte completely infiltrated the positive and negative electrodes, at 25°C, it was first charged at 0.02C to a voltage of 3.4V and then charged at 0.05C to a voltage of 3.7V to form an SEI film on the surface of the negative electrode active material. The gas generated in the battery was then pumped out, and the battery was charged at 0.33C to the upper limit voltage and charged at a constant voltage of 0.05C and then cut off to form a CEI film on the surface of the positive electrode active material, and the lithium-ion battery of this example was obtained.

### Example 6

1) Preparation of the negative pole piece: the negative electrode active material artificial graphite, the conductive agent CNT, and the binder CMC were mixed at a mass ratio of 92:4:4, and then the solvent deionized water was added to the resulting mixed material. The mixture was stirred under the action of a vacuum mixer until the system was uniform, and the negative electrode slurry was obtained. The negative electrode slurry was uniformly coated on a negative electrode current collector copper foil, dried under vacuum at 100°C for 12 hours, and cold pressed at a compaction density of 1.62 g/cm³ to make the particles tightly packed, and finally a negative pole piece with a pore area of 3.2 m²/g was obtained.
2) Preparation of the positive pole piece: the positive electrode active material NCM, the conductive agent carbon black, and the binder PVDF were mixed in a mass ratio of 94:3:3, and then the dispersant NMP was added to the resulting mixed material. The mixture was stirred under the action of a vacuum mixer until the system was uniform, and the positive electrode slurry was obtained. The positive electrode slurry was uniformly coated on a positive electrode current collector aluminum foil, dried under vacuum at 85°C for 24 hours, and then cold pressed at a compaction density of 3.45 g/cm³ to make the particles tightly packed, and finally a positive pole piece with a pore area of 2.85 m²/g was obtained.
3) Assembly of the cell: the positive pole piece, the separator film, and the negative pole piece were wound to form a cell, and the separator film was placed between the positive pole piece and the negative pole piece for isolation.
4) Electrolyte configuration: by mass ratio, EC:EMC:DEC=1:1:1 was used as the solvent, LiPF₆ was used as the lithium salt, and the concentration of the lithium salt in the electrolyte was 1.2 mol/L. By mass percentage, FEC and D2 accounting for 0.5% and 0.5% of the total mass of the electrolyte were used as the additives.
5) Battery assembly and formation: the cell was put into the casing, and the electrolyte was injected into the casing, sealed, and left to stand for 12 hours. After the electrolyte completely infiltrated the positive and negative electrodes, at 45°C, it was first charged at 0.02C to a voltage of 3.4V and then charged at 0.05C to a voltage of 3.7V to form an SEI film on the surface of the negative electrode active material. The gas generated in the battery was then pumped out, and the battery was charged at 0.33C to the upper limit voltage and charged at a constant voltage of 0.05C and then cut off to form a CEI film on the surface of the positive electrode active material, and the lithium-ion battery of this example was obtained.

### Example 7

1) Preparation of the negative pole piece: the negative electrode active material artificial graphite, the conductive agent CNT, and the binder CMC were mixed at a mass ratio of 92:4:4, and then the solvent deionized water was added to the resulting mixed material. The mixture was stirred under the action of a vacuum mixer until the system was uniform, and the negative electrode slurry was obtained. The negative electrode slurry was uniformly coated on a negative electrode current collector copper foil, dried under vacuum at 100°C for 12 hours, and cold pressed at a compaction density of 1.62 g/cm³ to make the particles tightly packed, and finally a negative pole piece with a pore area of 3.2 m²/g was obtained.
2) Preparation of the positive pole piece: the positive electrode active material NCM-H₃BO₃ (0.35wt%), the conductive agent carbon black, and the binder PVDF were mixed in a mass ratio of 94:3:3, and then the dispersant NMP was added to the resulting mixed material. The mixture was stirred under the action of a vacuum mixer until the system was uniform, and the positive electrode slurry was obtained. The positive electrode slurry was uniformly coated on a positive electrode current collector aluminum foil, dried under vacuum at 85°C for 24 hours, and then cold pressed at a compaction density of 3.55 g/cm³ to make the particles tightly packed, and finally a positive pole piece with a pore area of 2.5 m²/g was obtained.
   In this example, the method of coating H₃BO₃ on the surface of NCM was as follows: NCM and H₃BO₃ were mixed according to the mass ratio of 100:0.368, homogenized by a sand mill, then placed in a high-temperature sintering furnace at a rate of 5 °C/min to 350 °C, kept for 7 hours, and naturally cooled to room temperature.
3) Assembly of the cell: the positive pole piece, the separator film, and the negative pole piece were wound to form a cell, and the separator film was placed between the positive pole piece and the negative pole piece for isolation.
4) Electrolyte configuration: by mass ratio, EC:EMC:DEC=1:1:1 was used as the solvent, LiPF₆ was used as the lithium salt, and the concentration of the lithium salt in the electrolyte was 1.2 mol/L. By mass percentage, D2 accounting for 4.5% of the total mass of the electrolyte was used as the additive.
5) Battery assembly and formation: the cell was put into the casing, and the electrolyte was injected into the casing, sealed, and left to stand for 12 hours. After the electrolyte completely infiltrated the positive and negative electrodes, at 25°C, it was first charged at 0.02C to a voltage of 3.4V and then charged at 0.05C to a voltage of 3.7V to form an SEI film on the surface of the negative electrode active material. The gas generated in the battery was then pumped out, and the battery was charged at 0.33C to the upper limit voltage and charged at a constant voltage of 0.05C and then cut off to form a CEI film on the surface of the positive electrode active material, and the lithium-ion battery of this example was obtained.

### Example 8

1) Preparation of the negative pole piece: the negative electrode active material artificial graphite, the conductive agent CNT, and the binder CMC were mixed at a mass ratio of 92:4:4, and then the solvent deionized water was added to the resulting mixed material. The mixture was stirred under the action of a vacuum mixer until the system was uniform, and the negative electrode slurry was obtained. The negative electrode slurry was uniformly coated on a negative electrode current collector copper foil, dried under vacuum at 100°C for 12 hours, and cold pressed at a compaction density of 1.65 g/cm³ to make the particles tightly packed, and finally a negative pole piece with a pore area of 3.0 m²/g was obtained.
2) Preparation of the positive pole piece: the positive electrode active material NCM, the conductive agent carbon black, and the binder PVDF were mixed in a mass ratio of 94:3:3, and then the dispersant NMP was added to the resulting mixed material. The mixture was stirred under the action of a vacuum mixer until the system was uniform, and the positive electrode slurry was obtained. The positive electrode slurry was uniformly coated on a positive electrode current collector aluminum foil, dried under vacuum at 85°C for 24 hours, and then cold pressed at a compaction density of 3.55 g/cm³ to make the particles tightly packed, and finally a positive pole piece with a pore area of 2.5 m²/g was obtained.
3) Assembly of the cell: the positive pole piece, the separator film, and the negative pole piece were wound to form a cell, and the separator film was placed between the positive pole piece and the negative pole piece for isolation.
4) Electrolyte configuration: by mass ratio, EC:EMC:DEC=1:1:1 was used as the solvent, LiPF₆ was used as the lithium salt, and the concentration of the lithium salt in the electrolyte was 1.2 mol/L. By mass percentage, FEC and D2 accounting for 2.0% and 1.8% of the total mass of the electrolyte were used as the additives.
5) Battery assembly and formation: the cell was put into the casing, and the electrolyte was injected into the casing, sealed, and left to stand for 12 hours. After the electrolyte completely infiltrated the positive and negative electrodes, at 25°C, it was first charged at 0.02C to a voltage of 3.4V and then charged at 0.05C to a voltage of 3.7V to form an SEI film on the surface of the negative electrode active material. The gas generated in the battery was then pumped out, and the battery was charged at 0.33C to the upper limit voltage and charged at a constant voltage of 0.05C and then cut off to form a CEI film on the surface of the positive electrode active material, and the lithium-ion battery of this example was obtained.

### Example 9

1) Preparation of the negative pole piece: the negative electrode active material artificial graphite, the conductive agent CNT, and the binder CMC were mixed at a mass ratio of 92:4:4, and then the solvent deionized water was added to the resulting mixed material. The mixture was stirred under the action of a vacuum mixer until the system was uniform, and the negative electrode slurry was obtained. The negative electrode slurry was uniformly coated on a negative electrode current collector copper foil, dried under vacuum at 100°C for 12 hours, and cold pressed at a compaction density of 1.68 g/cm³ to make the particles tightly packed, and finally a negative pole piece with a pore area of 2.9 m²/g was obtained.
2) Preparation of the positive pole piece: the positive electrode active material NCM, the conductive agent carbon black, and the binder PVDF were mixed in a mass ratio of 94:3:3, and then the dispersant NMP was added to the resulting mixed material. The mixture was stirred under the action of a vacuum mixer until the system was uniform, and the positive electrode slurry was obtained. The positive electrode slurry was uniformly coated on a positive electrode current collector aluminum foil, dried under vacuum at 85°C for 24 hours, and then cold pressed at a compaction density of 3.55 g/cm³ to make the particles tightly packed, and finally a positive pole piece with a pore area of 2.5 m²/g was obtained.
3) Assembly of the cell: the positive pole piece, the separator film, and the negative pole piece were wound to form a cell, and the separator film was placed between the positive pole piece and the negative pole piece for isolation.
4) Electrolyte configuration: by mass ratio, EC:EMC:DEC=1:1:1 was used as the solvent, LiPF₆ was used as the lithium salt, and the concentration of the lithium salt in the electrolyte was 1.2 mol/L. By mass percentage, FEC and D2 accounting for 2.3% and 2.6% of the total mass of the electrolyte were used as the additives.
5) Battery assembly and formation: the cell was put into the casing, and the electrolyte was injected into the casing, sealed, and left to stand for 12 hours. After the electrolyte completely infiltrated the positive and negative electrodes, at 25°C, it was first charged at 0.02C to a voltage of 3.4V and then charged at 0.05C to a voltage of 3.7V to form an SEI film on the surface of the negative electrode active material. The gas generated in the battery was then pumped out, and the battery was charged at 0.33C to the upper limit voltage and charged at a constant voltage of 0.05C and then cut off to form a CEI film on the surface of the positive electrode active material, and the lithium-ion battery of this example was obtained.

### Example 10

1) Preparation of the negative pole piece: the negative electrode active material artificial graphite, the conductive agent CNT, and the binder CMC were mixed at a mass ratio of 92:4:4, and then the solvent deionized water was added to the resulting mixed material. The mixture was stirred under the action of a vacuum mixer until the system was uniform, and the negative electrode slurry was obtained. The negative electrode slurry was uniformly coated on a negative electrode current collector copper foil, dried under vacuum at 100°C for 12 hours, and cold pressed at a compaction density of 1.7 g/cm³ to make the particles tightly packed, and finally a negative pole piece with a pore area of 2.8 m²/g was obtained.
2) Preparation of the positive pole piece: the positive electrode active material NCM, the conductive agent carbon black, and the binder PVDF were mixed in a mass ratio of 94:3:3, and then the dispersant NMP was added to the resulting mixed material. The mixture was stirred under the action of a vacuum mixer until the system was uniform, and the positive electrode slurry was obtained. The positive electrode slurry was uniformly coated on a positive electrode current collector aluminum foil, dried under vacuum at 85°C for 24 hours, and then cold pressed at a compaction density of 3.55 g/cm³ to make the particles tightly packed, and finally a positive pole piece with a pore area of 2.5 m²/g was obtained.
3) Assembly of the cell: the positive pole piece, the separator film, and the negative pole piece were wound to form a cell, and the separator film was placed between the positive pole piece and the negative pole piece for isolation.
4) Electrolyte configuration: by mass ratio, EC:EMC:DEC=1:1:1 was used as the solvent, LiPF₆ was used as the lithium salt, and the concentration of the lithium salt in the electrolyte was 1.2 mol/L. By mass percentage, FEC and D2 accounting for 3.7% and 3% of the total mass of the electrolyte were used as the additives.
5) Battery assembly and formation: the cell was put into the casing, and the electrolyte was injected into the casing, sealed, and left to stand for 12 hours. After the electrolyte completely infiltrated the positive and negative electrodes, at 25°C, it was first charged at 0.02C to a voltage of 3.4V and then charged at 0.05C to a voltage of 3.7V to form an SEI film on the surface of the negative electrode active material. The gas generated in the battery was then pumped out, and the battery was charged at 0.33C to the upper limit voltage and charged at a constant voltage of 0.05C and then cut off to form a CEI film on the surface of the positive electrode active material, and the lithium-ion battery of this example was obtained.

### Comparative Example 1

1) Preparation of the negative pole piece: the negative electrode active material artificial graphite, the conductive agent CNT, and the binder CMC were mixed at a mass ratio of 92:4:4, and then the solvent deionized water was added to the resulting mixed material. The mixture was stirred under the action of a vacuum mixer until the system was uniform, and the negative electrode slurry was obtained. The negative electrode slurry was uniformly coated on a negative electrode current collector copper foil, dried under vacuum at 100°C for 12 hours, and cold pressed at a compaction density of 1.62 g/cm³ to make the particles tightly packed, and finally a negative pole piece with a pore area of 3.2 m²/g was obtained.
2) Preparation of the positive pole piece: the positive electrode active material NCM, the conductive agent carbon black, and the binder PVDF were mixed in a mass ratio of 94:3:3, and then the dispersant NMP was added to the resulting mixed material. The mixture was stirred under the action of a vacuum mixer until the system was uniform, and the positive electrode slurry was obtained. The positive electrode slurry was uniformly coated on a positive electrode current collector aluminum foil, dried under vacuum at 85°C for 24 hours, and then cold pressed at a compaction density of 3.6 g/cm³ to make the particles tightly packed, and finally a positive pole piece with a pore area of 2.13 m²/g was obtained.
3) Assembly of the cell: the positive pole piece, the separator film, and the negative pole piece were wound to form a cell, and the separator film was placed between the positive pole piece and the negative pole piece for isolation.
4) Electrolyte configuration: by mass ratio, EC:EMC:DEC=1:1:1 was used as the solvent, LiPF₆ was used as the lithium salt, and the concentration of the lithium salt in the electrolyte was 1.2 mol/L.
5) Battery assembly and formation: the cell was put into the casing, and the electrolyte was injected into the casing, sealed, and left to stand for 12 hours. After the electrolyte completely infiltrated the positive and negative electrodes, at 45°C, it was first charged at 0.02C to a voltage of 3.4V and then charged at 0.05C to a voltage of 3.7V to form an SEI film on the surface of the negative electrode active material. The gas generated in the battery was then pumped out, and the battery was charged at 0.33C to the upper limit voltage and charged at a constant voltage of 0.05C and then cut off to form a CEI film on the surface of the positive electrode active material, and the lithium-ion battery of this example was obtained.

### Comparative Example 2

1) Preparation of the negative pole piece: the negative electrode active material artificial graphite, the conductive agent CNT, and the binder CMC were mixed at a mass ratio of 92:4:4, and then the solvent deionized water was added to the resulting mixed material. The mixture was stirred under the action of a vacuum mixer until the system was uniform, and the negative electrode slurry was obtained. The negative electrode slurry was uniformly coated on a negative electrode current collector copper foil, dried under vacuum at 100°C for 12 hours, and cold pressed at a compaction density of 1.62 g/cm³ to make the particles tightly packed, and finally a negative pole piece with a pore area of 3.2 m²/g was obtained.
2) Preparation of the positive pole piece: the positive electrode active material NCM-H₃BO₃ (0.35wt%), the conductive agent carbon black, and the binder PVDF were mixed in a mass ratio of 94:3:3, and then the dispersant NMP was added to the resulting mixed material. The mixture was stirred under the action of a vacuum mixer until the system was uniform, and the positive electrode slurry was obtained. The positive electrode slurry was uniformly coated on a positive electrode current collector aluminum foil, dried under vacuum at 85°C for 24 hours, and then cold pressed at a compaction density of 3.35 g/cm³ to make the particles tightly packed, and finally a positive pole piece with a pore area of 3.6 m²/g was obtained.
3) Assembly of the cell: the positive pole piece, the separator film, and the negative pole piece were wound to form a cell, and the separator film was placed between the positive pole piece and the negative pole piece for isolation.
4) Electrolyte configuration: by mass ratio, EC:EMC:DEC=1:1:1 was used as the solvent, LiPF₆ was used as the lithium salt, and the concentration of the lithium salt in the electrolyte was 1.2 mol/L. By mass percentage, FEC and D2 accounting for 2.5% and 4.2% of the total mass of the electrolyte were used as the additives.
5) Battery assembly and formation: the cell was put into the casing, and the electrolyte was injected into the casing, sealed, and left to stand for 12 hours. After the electrolyte completely infiltrated the positive and negative electrodes, at 25°C, it was first charged at 0.02C to a voltage of 3.4V and then charged at 0.05C to a voltage of 3.7V to form an SEI film on the surface of the negative electrode active material. The gas generated in the battery was then pumped out, and the battery was charged at 0.33C to the upper limit voltage and charged at a constant voltage of 0.05C and then cut off to form a CEI film on the surface of the positive electrode active material, and the lithium-ion battery of this example was obtained.

Table 1 shows the main process conditions during the preparation of the lithium-ion batteries of Examples 1-10 and Comparative Examples 1-2.

**Table 1**

| Preparation Object | Pore Area of Negative pole piece | Positive Electrode Active Material | Pore Area of Positive pole piece | Electrolyte Additive | SEI Film Formation Condition |
|---|---|---|---|---|---|
| Example 1 | 3.2m²/g | NCM | 2.5m²/g | 3%FEC 2.5%D2 | 25°C@0.02C-3.4V/0.05C-3.7V |
| Example 2 | 3.2m²/g | NCM | 2.5m²/g | 1 %FEC 1%D2 | 45°C@0.02C-3.4V/0.05C-3.7V |
| Example 3 | 3.2m²/g | NCM-H₃BO₃(0.15wt%) | 2.5m²/g | 2%FEC 3%D2 | 25°C@0.02C-3.4V/0.05C-3.7V |
| Example 4 | 3.2m²/g | NCM-Li₂WO₄(0.5wt%) | 2.5m²/g | 1%FEC 1.5%D2 | 25°C@0.02C-3.4V/0.05C-3.7V |
| Example 5 | 3.6m²/g | NCM | 2.5m²/g | 5%FEC | 25°C@0.02C-3.4V/0.05C-3.7V |
| Example 6 | 3.2m²/g | NCM | 2.85m²/g | 0.5%FEC 0.5%D2 | 45°C@0.02C-3.4V/0.05C-3.7V |
| Example 7 | 3.2m²/g | NCM-H₃BO₃ ( 0.35wt%) | 2.5m²/g | 4.5%D2 | 25°C@0.02C-3.4V/0.05C-3.7V |
| Example 8 | 3.0m²/g | NCM | 2.5m²/g | 2.0%FEC 1.8%D2 | 25°C@0.02C-3.4V/0.05C-3.7V |
| Example 9 | 2.9m²/g | NCM | 2.5m²/g | 2.3%FEC 2.6%D2 | 25°C@0.02C-3.4V/0.05C-3.7V |
| Example 10 | 2.8m²/g | NCM | 2.5m²/g | 3.7%FEC 3%D2 | 25°C@0.02C-3.4V/0.05C-3.7V |
| Comparative Example 1 | 3.2m²/g | NCM | 2.13m²/g | - | 45°C@0.02C-3.4V/0.05C-3.7V |
| Comparative Example 2 | 3.2m²/g | NCM-H₃BO₃ ( 0.35wt%) | 3.6m²/g | 2.5%FEC 4.2%D2 | 25°C@0.02C-3.4V/0.05C-3.7V |

### Performance Testing and Analysis

1. Test objects: lithium-ion batteries prepared in Examples 1 to 10 and Comparative Examples 1 to 2.
2. Test Items

### 1) SEI film resistance and CEI film resistance

The lithium-ion battery was charged and discharged for 2 weeks with a current of 0.05C, so that the active lithium ions could be embedded back into the positive electrode material as much as possible.

The lithium-ion battery was disassembled in a low-humidity normal temperature environment to obtain complete positive and negative pole pieces. The obtained pole pieces were soaked in DMC at room temperature for 12 hours in a N₂ glove box, fully rinsed 3 times to remove residual electrolyte, and dried in a vacuum drying oven at room temperature for 12 hours.

The treated pole pieces were reassembled to a half battery, and the electrolyte was injected (the electrolyte formula was EC:EMC:DEC solvent with a volume ratio of 1:1:1, and 1mol/L LiPF₆ was added).

After standing for 6 hours, the ElS test was performed on a positive half battery and a negative half battery. The battery was placed in a test box with a constant temperature of 25°C, and the test parameters were set to a voltage disturbance with a frequency of 0.01-1^{∗}10⁶Hz.

After the test, the equivalent circuit was fitted to the test results through Zview, and the film impedance of the positive and negative pole pieces, namely R_{CEI} and R_{SEI}, were obtained according to the fitting results of the first semicircle in the middle and high frequencies.

### 2) Low-temperature discharge capability of the lithium-ion battery

a: The discharging capacity Q_{room temperature} of the test object at a room temperature of 25°C was known.
b: Environmental adaptation, the test obj ect was left to stand until its temperature reached room temperature, that is, 25°C±2°C.
c: Standard charging, charging at a constant current rate of 0.33C was performed to the specified charge cut-off voltage, and then charging at a constant voltage was performed at this voltage until the current dropped to 0.05C.
d: Environmental adaptation, the test object was left to stand until the temperature of the cell was -10°C ± 2°C.
e: Discharging with constant current at 0.33C rate was performed. During the discharging process, if the temperature of the cell rose above 5°C, the discharging stopped immediately and the cell was left to stand still until the cell temperature returned to -10°C±2°C. Discharging then continued until the discharging cut-off voltage at this temperature, and the low-temperature discharging capacity was recorded as Q_{low temperature}.
f: The percentage of the discharging capacity at low temperature Q_{low temperature} and the discharging capacity at room temperature Q_{room temperature}, i.e., the low-temperature discharge capability of the lithium-ion battery, was calculated.

### 3. Test results: see Table 2

**Table 2**

| Test Object | Positive Electrode Film Resistance R_{CEI} (mΩ) | Negative Electrode Film Resistance SEI (mΩ) | R_{CEI}/R_{SEI} Ratio | Low Temperature Discharge Capability (Q_{low temperature}/Q_{room temperature}) |
|---|---|---|---|---|
| Example 1 | 20.1 | 23.6 | 0.85 | 85.9% |
| Example 2 | 5.2 | 9 | 0.58 | 76.5% |
| Example 3 | 30 | 17.2 | 1.74 | 77.3% |
| Example 4 | 10.5 | 6.0 | 1.75 | 78.8% |
| Example 5 | 23.2 | 40 | 0.58 | 73.1% |
| Example 6 | 32 | 20 | 1.6 | 69.1% |
| Example 7 | 25.2 | 42 | 0.6 | 67.3% |
| Example 8 | 16 | 16 | 1.0 | 86.2% |
| Example 9 | 19.2 | 16 | 1.2 | 83.8% |
| Example 10 | 30 | 40 | 0.75 | 75.5% |
| Comparative Example 1 | 31 | 16 | 1.93 | 55.3% |
| Comparative Example 2 | 20 | 42 | 0.48 | 52.5% |

With reference to Table 2, when the test data of examples 1 to 10 and the test data of comparative examples 1 to 2 are compared, it can be known that when the R_{CEI}/R_{SEI} ratio satisfies 0.5 to 1.8, the lithium-ion battery has a high low-temperature discharge capability, and the discharge capacity of the lithium-ion battery at low temperature (-10°C in the disclosure) is greater than 67% or even as high as 86% of the discharge capacity of the lithium-ion battery at room temperature (25°C). However, once the R_{CEI}/R_{SEI} ratio is greater than 1.8, for example, the R_{CEI}/R_{SEI} ratio of Comparative Example 1 is 1.93, it means that the resistance of the solid electrolyte interface film CEI film on the surface of the positive electrode active material is excessively large compared to the resistance of the solid electrolyte interface film SEI film on the surface of the negative electrode active material, making it difficult to deintercalate lithium ions from the positive electrode. Combined with the slow movement of lithium ions in a low temperature environment, the diffusion rate is low, so a poor low-temperature discharge capacity is provided. The discharge capacity of the lithium-ion battery at low temperature (-10°C in the disclosure) is only 55.3% of the discharge capacity of the lithium-ion battery at room temperature (25°C). When the R_{CEI}/R_{SEI} ratio is lower than 0.5, for example, the R_{CEI}/R_{SEI} ratio of Comparative Example 2 is 0.48, it means that the resistance of the solid electrolyte interface film SEI film on the surface of the negative electrode active material is excessively large compared to the resistance of the solid electrolyte interface film CEI film on the surface of the positive electrode active material, making it difficult to deintercalate lithium ions from the negative electrode. Combined with the slow movement of lithium ions in a low temperature environment, the diffusion rate is low, so a poor low-temperature discharge capacity is provided. The discharge capacity of the lithium-ion battery at low temperature (-10°C in the disclosure) is only 52.5% of the discharge capacity of the lithium-ion battery at room temperature (25°C).

With reference to the low-temperature discharge capability test data of the lithium-ion batteries of Examples 1 to 10 in Table 2, the low-temperature discharge capabilities of the lithium-ion batteries of Examples 1 to 5 and 8 to 10 are all above 73%, even as high as 86%. However, the low-temperature discharge capabilities of the lithium-ion batteries of Examples 6 to 7 are less than 70%. This shows that the low-temperature discharge capability of the lithium-ion battery is not only related to the R_{CEI}/R_{SEI} ratio, but also related to the resistance values of the CEI film and the SEI film. When the R_{CEI}/R_{SEI} ratio satisfies 0.5 to 1.8, controlling R_{CEI} to 5mΩ to 30mΩ and R_{SEI} to 6mQ to 40mΩ can further improve the low-temperature discharge capability of the lithium-ion battery. The R_{CEI} of Example 6 is as high as 32mΩ, and the R_{SEI} of Example 7 is as high as 42mΩ. The resistances of the solid electrolyte interface films of the two are excessively large, so it is easy to cause difficulty in lithium ion deintercalation, and the fast charge performance and low-temperature discharge capability are affected.

Further, with reference to the low-temperature discharge capability test data of lithium-ion batteries in Examples 1 to 5 and Examples 8 to 10 in Table 2, it can be seen that the favorable R_{CEI}/R_{SEI} ratio satisfies 0.8 to 1.2. Based on the above, the low-temperature discharge capabilities of the lithium-ion batteries of Example 1 and Examples 8 to 9 is better than that of Example 10, indicating the lower resistance values of the SEI film and the CEI film. That is, an R_{CEI} of 10mΩ to 22mΩ and an R_{SEI} of 16mΩ to 24mΩ is more conducive to improving the low-temperature discharge capability of the lithium-ion battery. Compared to Example 3, Example 10 also has a better low-temperature discharge capability, indicating that the release increases the resistance of the CEI film, which is beneficial to the occurrence of thermochemistry. In this way, the internal temperature of the lithium-ion battery is raised, the movement of lithium ions is accelerated, and the diffusion rate is increased, so the low-temperature discharge capacity of the lithium-ion battery is thereby improved.

In Comparative Example 1, although the SEI film resistance is reduced and the CEI film resistance is increased, the CEI film resistance is excessively high, which made it difficult to deintercalate lithium ions from the positive electrode. Therefore, the low-temperature discharge capability is poor. In Comparative Example 2, the SEI film resistance is excessively high, which makes it difficult to deintercalate lithium ions from the negative electrode. As such, a poor low-temperature discharge capability is provided.

## Claims

1. A lithium-ion battery, comprising
a positive pole piece comprising a positive electrode active material, wherein a solid electrolyte interface film CEI film is formed on a surface of the positive electrode active material; and
a negative pole piece comprising a negative electrode active material, wherein a solid electrolyte interface film SEI film is formed on a surface of the negative electrode active material,
wherein a resistance R_{CEI} of the CEI film and a resistance R_{SEI} of the SEI film satisfy R_{CEI}/R_{SEI} =0.5 to 1.8.

2. The lithium-ion battery according to claim 1, wherein: the resistance R_{CEI} of the CEI film is 5mΩ to 30mΩ.

3. The lithium-ion battery according to claim 1, wherein: the resistance R_{SEI} of the SEI film is 6mΩ to 40mΩ.

4. The lithium-ion battery according to claim 1, wherein: wherein the resistance R_{CEI} of the CEI film and the resistance R_{SEI} of the SEI film satisfy R_{CEI}/R_{SEI} =0.8 to 1.2.

5. The lithium-ion battery according to claim 2, wherein: the resistance R_{CEI} of the CEI film is 10mΩ to 22mΩ.

6. The lithium-ion battery according to claim 3, wherein: the resistance R_{SEI} of the SEI film is 16mΩ to 24mΩ.

7. The lithium-ion battery according to any one of claims 1 to 6, wherein: the positive electrode active material comprises at least one of lithium iron phosphate, lithium cobalt oxide, lithium manganate, lithium nickel cobalt manganese oxide, lithium manganese iron phosphate, and lithium nickel manganese oxide.

8. The lithium-ion battery according to claim 7, wherein: the negative electrode active material comprises at least one of natural graphite, artificial graphite, mesocarbon microspheres, hard carbon, soft carbon, silicon, SiOₓ, silicon carbon, and Li₄Ti₅O₁.

9. The lithium-ion battery according to claim 8, wherein: the electrolyte comprises lithium salt, a solvent, and an additive, and the additive comprises at least one of fluoroethylene carbonate, vinyl sulfate, 1,1,2,2-tetrafluoroethyl-2,2,3,3-tetrafluoropropyl ether, and hexanetricarbonitrile.

10. The lithium-ion battery according to claim 9, wherein: a content of the additive accounts for 1% to 7% of a total mass of the electrolyte.

11. The lithium-ion battery according to claim 10, wherein: the additive comprises at least two of fluoroethylene carbonate, vinyl sulfate, 1,1,2,2-tetrafluoroethyl-2,2,3,3-tetrafluoropropyl ether, and hexanetricarbonitrile.
